# EUROPEAN PATENT APPLICATION

(11) **EP 4 057 219 A1**
(43) Date of publication of application: **14.09.2022**
(21) Application number: 20885296.2
(22) Date of filing: 28.10.2020
(51) Int. Cl.: G06T 7/00, G06F 21/31, G06F 21/32

(54) **AUTHENTICATION DEVICE, AUTHENTICATION SYSTEM, AUTHENTICATION METHOD, AND RECORDING MEDIUM**

(30) Priority: 07.11.2019 JP 2019202245
(71) Applicant: NEC Corporation, 108-8001 Tokyo (JP)
(72) Inventor: AKAGI, Kenichiro, Tokyo 108-8001 (JP)
(74) Representative: Betten & Resch
(86) International application number: PCT/JP2020/040418
(87) International publication number: WO 2021/090743

(57) **Abstract**

An authentication server (2) includes: an image obtaining unit (210) that obtains a captured image obtained by capturing authentication target person with position information indicating a captured position at which the authentication target person is captured; a face authentication unit (212) that authenticates the authentication target person by using a face image of the authentication target person in the captured image; a background comparison unit (214) that determines, based on the position information, expected background information related to background behind the authentication target person expected to be included in the captured image, and compares the expected background information and actual background information related to a background behind the authentication target person actually included in the captured image; and a communication apparatus (23) that outputs information indicating an authenticated result of the authentication target person and information indicating a compared result of the expected background information and the actual background information.

## Description

### Technical Field

The present disclosure relates to a technical field of an authentication apparatus, an authentication system, an authentication method and a recording medium that are configured to authenticate a authentication target person, for example.

### Background Art

An authentication apparatus that is configured to determine a face image of an authentication target person from a captured image that is obtained by capturing an image of the authentication target person, and to authenticate the authentication target person based on the determined face image is known (for example, see a Patent Literature 1 to a Patent Literature 3).

### Citation List

### Patent Literature

Patent Literature 1: JP2010-134735A
Patent Literature 2: JP2014-067090A
Patent Literature 3: JPH10-159529A (JP1998-159529A)

### Summary

### Technical Problem

It is an example object of the present disclosure to improve a technique disclosed in the above described Patent Literature.

### Solution to Problem

One example aspect of an authentication apparatus includes: an obtaining unit that is configured to obtain a captured image obtained by capturing an image of an authentication target person together with a position information indicating a captured position at which the image of the authentication target person is captured; an authentication unit that is configured to authenticate the authentication target person by using a face image of the authentication target person included in the captured image; a comparison unit that is configured to determine, based on the position information, an expected background information related to a background behind the authentication target person that is expected to be included in the captured image, and compare the expected background information and an actual background information related to a background behind the authentication target person that is actually included in the captured image; and an output unit that is configured to output an information indicating an authenticated result of the authentication target person and an information indicating a compared result of the expected background information and the actual background information.

One example aspect of an authentication system includes: an imaging apparatus that is configured to capture an image of an authentication target person; an authentication apparatus that is configured to authenticate the authentication target person by using a captured image captured by the imaging apparatus; and a management apparatus that is configured to manage an authenticated result by the authentication apparatus, the authentication apparatus includes: an obtaining unit that is configured to obtain the captured image together with a position information indicating a captured position at which the image of the authentication target person is captured; an authentication unit that is configured to authenticate the authentication target person by using a face image of the authentication target person included in the captured image; a comparison unit that is configured to determine, based on the position information, an expected background information related to a background behind the authentication target person that is expected to be included in the captured image, and compare the expected background information and an actual background information related to a background behind the authentication target person that is actually included in the captured image; and an output unit that is configured to output, to the management apparatus, an information indicating the authenticated result of the authentication target person and an information indicating a compared result of the expected background information and the actual background information, the management apparatus being configured to output, based on the information indicating the compared result of the expected background information and the actual background information, an alert information for alerting that the position information is possibly fake.

One example aspect of an authentication method includes: obtaining a captured image obtained by capturing an image of an authentication target person together with a position information indicating a captured position at which the image of the authentication target person is captured; authenticating the authentication target person by using a face image of the authentication target person included in the captured image; determining, based on the position information, an expected background information related to a background behind the authentication target person that is expected to be included in the captured image, and comparing the expected background information and an actual background information related to a background behind the authentication target person that is actually included in the captured image; and outputting an information indicating an authenticated result of the authentication target person and an information indicating a compared result of the expected background information and the actual background information.

One example aspect of a recording medium is a recording medium on which a computer program that allows a computer to execute an authentication method is recorded, the authentication method includes: obtaining a captured image obtained by capturing an image of an authentication target person together with a position information indicating a captured position at which the image of the authentication target person is captured; authenticating the authentication target person by using a face image of the authentication target person included in the captured image; determining, based on the position information, an expected background information related to a background behind the authentication target person that is expected to be included in the captured image, and comparing the expected background information and an actual background information related to a background behind the authentication target person that is actually included in the captured image; and outputting an information indicating an authenticated result of the authentication target person and an information indicating a compared result of the expected background information and the actual background information.

### Brief Description of Drawings

[FIG. 1] FIG. 1 is a block diagram that illustrates an entire configuration of an authentication system in a first example embodiment.
[FIG. 2] FIG. 2 is a block diagram that illustrates a configuration of an imaging apparatus in the first example embodiment.
[FIG. 3] FIG. 3 is a block diagram that illustrates a configuration of an authentication server in the first example embodiment.
[FIG. 4] FIG. 4 is a block diagram that illustrates a configuration of a management server in the first example embodiment.
[FIG. 5] FIG. 5 is a flow chart that illustrates a flow of an operation of the imaging apparatus in the first example embodiment.
[FIG. 6] FIG. 6 is a flow chart that illustrates a flow of an operation of the authentication server in the first example embodiment.
[FIG. 7] FIG. 7 illustrates a data structure of an authentication log DB.
[FIG. 8] FIG. 8 is a flow chart that illustrates a flow of an operation of the management server in the first example embodiment.
[FIG. 9] FIG. 9 is a block diagram that illustrates a configuration of an authentication server in a second example embodiment.
[FIG. 10] FIG. 10 illustrates a data structure of a background DB.
[FIG. 11] FIG. 11 is a block diagram that illustrates a configuration of an imaging apparatus in a third example embodiment.
[FIG. 12] FIG. 12 is a block diagram that illustrates a configuration of an authentication server in a fourth example embodiment.
[FIG. 13] FIG. 13 is a block diagram that illustrates a configuration of an authentication server in a fifth example embodiment.
[FIG. 14] FIG. 14 is a block diagram that illustrates a configuration of an authentication server in an modified example.

### Description of Example Embodiments

An inventor develops an authentication apparatus that is configured to obtain a captured image together with a position information indicating a captured position at which an image of the authentication target person and store (namely, record or save) the position information together with an authenticated result of the authentication target person in a storage apparatus, in order to improve a technique disclosed in the above described Patent Literature. In this case, the position information is usable as a proof indicating that the authentication target person has been located at the captured position indicated by the position information (namely, the authentication target person located at the captured position indicated by the position information has been authenticated), for example.

As one example, this authentication apparatus is usable for managing an entrance and exist of a construction worker, which is one example of the authentication target person, with respect to a construction site. In this case, the authentication apparatus obtains the position information related to the captured position (namely, the position information indicating a position of the construction site or an entrance and exist gate) together with the captured image obtained by capturing an image of the construction worker at the entrance and exit gate of the construction site. In this case, the position information is usable as a proof indicating that the authenticated construction worker has been surely located at the construction site (namely, has surely entered the construction site or has surely left the construction site), for example.

However, the position information can be faked. Thus, when the faked position information is obtained together with the capture image, this position information is not usable as the proof indicating that the authentication target person has been located at the captured position indicated by the position information. For example, there is a possibility that the construction worker that is located at a position different from the construction site fakes the position information in order to pretend to enter the construction site. In this case, when the position information that is faked so as to indicate the position of the construction site is obtained together with the captured image obtained by capturing the image of the construction worker, this position information could be used as a false proof indicating that the construction worker, who is not actually located at the construction site, is located at the construction site. Thus, the authentication apparatus that obtains the position information together with the captured image needs a countermeasure for the fake of the position information.

Next, with reference to drawings, an example embodiment of an authentication apparatus, an authentication system, an authentication method, a computer program and a recording medium that are capable of solving the above described technical problem will be described. Specifically, an example embodiment of an authentication apparatus, an authentication system, an authentication method, a computer program and a recording medium that are configured to output an information usable to determine whether or not the position information is possibly fake will be described as one example. In the below described description, an example embodiment of an authentication apparatus, an authentication system, an authentication method, a computer program and a recording medium will be described by using an authentication system SYS that that extracts a face image of an authentication target person from a captured image obtained by capturing an image of the authentication target person and that authenticates the authentication target person by using the extracted face image.

### (1) Authentication System SYSa in First Example Embodiment

Firstly, an authentication system SYS in a first example embodiment will be described. Hereinafter, the authentication system SYS in the first example embodiment is referred to as an "authentication system SYSa".

### (1-1) Configuration of Authentication System SYS

### (1-1-1) Entire Configuration of Authentication System SYS

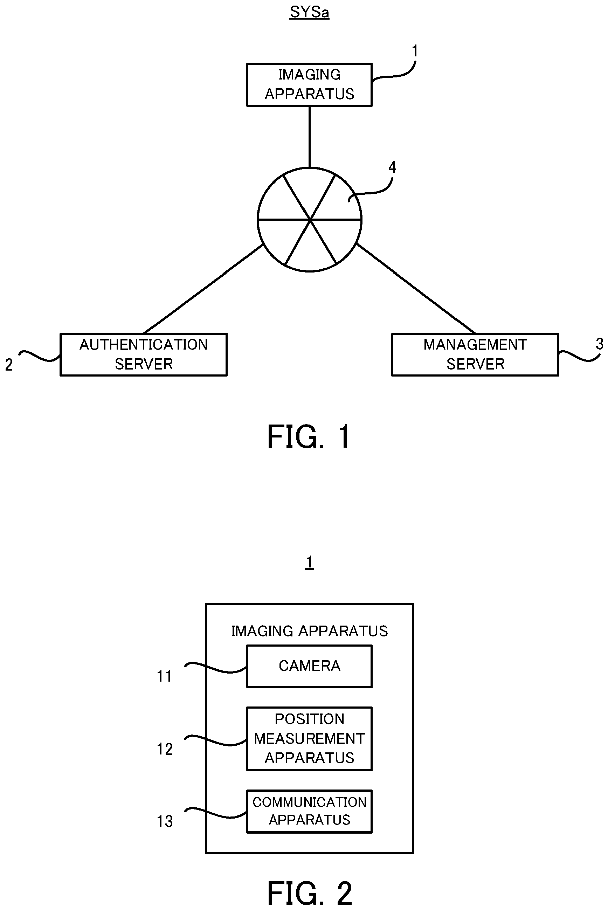

Firstly, with reference to FIG. 1, an entire configuration of the authentication system SYSa in the first example embodiment will be described. FIG. 1 is a block diagram that illustrates the entire configuration of the authentication system SYSa in the first example embodiment.

As illustrated in FIG. 1, the authentication system SYSa includes an imaging apparatus 1, an authentication server 2 that is one example of an "authentication apparatus" and a management server 3 that is one example of a "management apparatus". The imaging apparatus 1, the authentication server 2 and the management server 3 are capable of communicate with one another through a communication network 4. The communication network 4 may include a wired communication network and may include a wireless communication network. Note that a configuration and an operation of each of the imaging apparatus 1, the authentication server 2 and the management server 3 will be described later in detail, however, an overview thereof is described here.

The imaging apparatus 1 captures an image of the authentication target person. The imaging apparatus 1 transmits the captured image obtained by capturing the image of the authentication target person to the authentication server 2 through the communication network 4. Furthermore, the imaging apparatus 1 transmits a captured position information indicating a captured image at which the image of the authentication target person is captured together with the captured image to the authentication server 2 through the communication network 4. Namely, in the first example embodiment, the captured image is transmitted from the imaging apparatus 1 to the authentication server 2 in a state where it is associated with (in other words, linked with) the captured position information.

The authentication server 2 performs an authentication operation for authenticating the authentication target person. Specifically, the authentication server 2 receives the captured image transmitted from the imaging apparatus 1 and authenticates (in other words, identify or determine) the authentication target person. The authentication server 2 store (in other words, records or saves) an authentication log indicating an authenticated result of the authentication target person. Furthermore, the authentication server 2 receives the captured position information transmitted from the imaging apparatus 1 and generates an information that is usable to determine whether or not the captured position information received is possibly fake. In the first example embodiment, as described later, the authentication server 2 calculates (namely, generates), as the information that is usable to determine whether or not the captured position information is possibly fake, a dissimilarity score that indicates a degree of a dissimilarity between an expected background information and an actual background information, wherein the expected background information is related to a background behind the authentication target person that is expected to be included in the captured image when the image of the authentication target is captured at the captured position indicated by the captured position information, and the actual background information is related to a background that is actually included in the captured image actually received from the imaging apparatus 1. The authentication server 2 stores not only the authentication log but also the dissimilarity score. Namely, in the first example embodiment, the authentication log indicating the authenticated result using one captured image is stored in a state where it is associated with (in other words, linked with) the dissimilarity calculated based on one captured position information that is transmitted tother with the one captured image. Furthermore, the authentication server 2 transmits at least one of the authentication log and the dissimilarity score to the management server 3 through the communication network 4. Note that the authentication log is one example of an information indicating the authenticated result. Moreover, the dissimilarity score is one example of an information indicating a compared result.

The management server 3 performs a log management operation for managing the authentication log. Specifically, the management server 3 receives the authentication log and the dissimilarity score transmitted from the authentication server 2. The management server 3 extracts, based on the dissimilarity score, the authentication log corresponding to the captured position information that is possibly fake. Furthermore, the management server 3 may output an alert information for alerting an administrator that the authentication log corresponding to the captured position information that is possibly fake is extracted, if necessary. The management server 3 is one example of the management apparatus.

### (1-1-2) Configuration of Imaging Apparatus 1

Next, with reference to FIG. 2, a configuration of the imaging apparatus 1 will be described. FIG. 2 is a block diagram that illustrates the configuration of the imaging apparatus 1.

As illustrated in FIG. 2, the imaging apparatus 1 includes a camera 11, a position measurement apparatus 12 and a communication apparatus 13.

The camera 11 is an apparatus that is configured to capture an image of the authentication target person. Specifically, the camera 11 captures the image of the authentication target person when the authentication target person is located in an angle of view (in other words, an imaging rang) of the camera 11. Incidentally, as described later, the background behind the authentication target person is used to calculate the dissimilarity score for determining whether or not the captured position information is fake, and thus, the angle of view of the camera 11 is set to be a proper angle so as to include not only the authentication target person located in the angle of view but also the background behind the authentication target person located in the angle of view.

The position measurement apparatus 12 is an apparatus that measures the captured position at which the imaging apparatus 1 (specifically, the camera 11 of the imaging apparatus 1) captures the image of the authentication target person. The position measurement apparatus 12 may measure the captured position by using a GPS (Global Positioning System), for example. However, the position measurement apparatus 12 may measure the captured position by using another method. Incidentally, it can be said that the captured position is equivalent to a position of the imaging apparatus 1.

The communication apparatus 13 is configured to transmit and receive a desired information through the communication network 4. In the first example embodiment, the communication apparatus 13 transmits the captured image captured by the camera 11 to the authentication server 2 through the communication network 4. Moreover, the communication apparatus 13 transmits the captured position information indicating the captured position measured by the position measurement apparatus 12 to the authentication server 2 through the communication network 4.

This imaging apparatus 1 may be a mobile terminal of the authentication target person. In this case, the authentication system SYS may include the imaging apparatus 1 the number of which is equal to the number of the authentication target person. Alternatively, the imaging apparatus 1 may be a stationary terminal disposed at an authentication point at which the authentication target person should be authenticated.

### (1-1-3) Configuration of Authentication Server 2

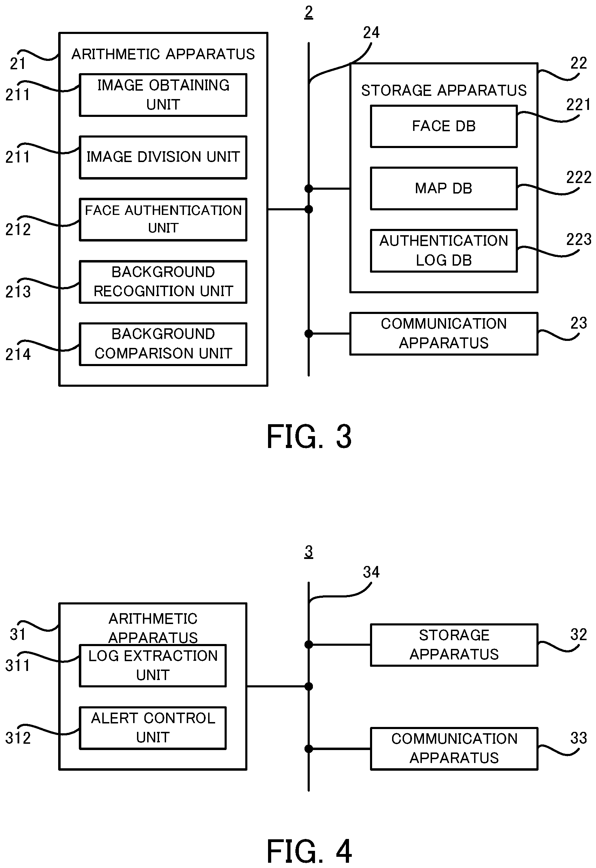

Next, with reference to FIG. 3, a configuration of the authentication server 2 will be described. FIG. 3 is a block diagram that illustrates the configuration of the authentication server 2.

As illustrated in FIG. 3, the authentication server 2 includes an arithmetic apparatus 21, a storage apparatus 22 and a communication apparatus 23. The arithmetic apparatus 21, the storage apparatus 22 and the communication apparatus 23 are connected through a data bus 24. Note that the authentication server 2 may be referred to as an "authentication apparatus". Namely, the authentication server 2 is one example of the authentication apparatus.

The arithmetic apparatus 21 includes at least one of a CPU (Central Processing Unit) and a GPU (Graphic Processing Unit), for example. The arithmetic apparatus 21 reads a computer program. For example, the arithmetic apparatus 21 may read a computer program stored in the storage apparatus 22. For example, the arithmetic apparatus 21 may read a computer program stored in a computer-readable recording medium (for example, a non-transitory recording medium), by using a not-illustrated recording medium reading apparatus of the arithmetic apparatus 21. The arithmetic apparatus 21 may obtain (namely, download or read) a computer program from a not-illustrated apparatus placed outside the authentication server 2 through a communication network interface.

In the first example embodiment, when the arithmetic apparatus 21 executes the read computer program, a logical functional block for performing the authentication operation for authenticating the authentication target person is implemented in the arithmetic apparatus 21. Namely, the arithmetic apparatus 21 is configured to serve as a controller for implementing the logical functional block for performing the authentication operation.

Specifically, an image obtaining unit 210, an image division unit 211, a face authentication unit 212, a background recognition unit 213 and a background comparison unit 214 are implemented in the arithmetic apparatus 21 as the logical functional block for performing the authentication operation. Note that operations of the image division unit 211, the face authentication unit 212, the background recognition unit 213 and the background comparison unit 214 will be described later in detail, however, an overview thereof is described here.

The image obtaining unit 210 obtains the captured image transmitted from the imaging apparatus 1 together with the captured position information transmitted from the imaging apparatus 1 through the communication apparatus 23. The imaging obtaining unit 210 is one example of an "obtaining unit".

The image division unit 211 divides the captured image received from the imaging apparatus 1 into the face image in which a face of the authentication target person is included and a background image in which the background behind the authentication target person is included.

The face authentication unit 212 authenticates the authentication target person by using the face image divided by the image division unit 211.

The background recognition unit 213 recognizes an object (hereinafter, it is referred to as an "actual object") that is actually included in the background image divided by the image division unit 211. An information indicating the recognized actual object corresponds to one example of the above described actual background information related to the background that is actually included in the captured image.

The background comparison unit 214 determines an object (hereinafter, it is referred to as an "expected object") that is expected to be included as the background behind the authentication target in the captured image when the image of the authentication target person is captured at the captured position indicated by the captured position information. In other words, the background comparison unit 214 determines the expected background information based on the position information and a reference information that should be used to determine the expected background information from the position information. For example, the expected object is an object that exists at the captured position or near the captured position in large numbers. The background comparison unit 214 is one example of a comparison unit. Moreover, an information indicating the expected object determined by the background comparison unit 214 corresponds to one example of the above described expected background information related to the background that is expected to be included in the captured image. Furthermore, the background comparison unit 214 calculates the dissimilarity score that indicates a degree of a dissimilarity between the determined expected object and the actual object that is recognized by the background recognition unit 213. The background comparison unit 214 is one example of the comparison unit.

The storage apparatus 22 is an apparatus that is configured to store (namely, record or save) a desired information. Especially in the first example embodiment, the storage apparatus 22 stores an information related to the authentication operation. For example, the storage apparatus 22 may store a face DB (DataBase) 221 that stores data related to the face image that is used by the face authentication unit 212 to authenticate the authentication target person (for example, data indicating a feature of the face). For example, the storage apparatus 22 may store a map DB 222 in which an map information that is used by the background comparison unit 214 to determine the expected object is stored. The map DB 222 is one example of a first information related to a map. The first information is included in the reference information that should be used to determine the expected background information from the position information. For example, the storage apparatus 22 may store a authentication log DB 223 in which the authentication log indicating the authenticated result of the authentication target person by the face authentication unit 212 is stored. The storage apparatus 22 may include at least one of a ROM (Read Only Memory), a RAM (Random Access Memory), a hard disk apparatus, a magneto-optical disc, a SSD (Solid State Drive) and a disk array apparatus, for example. Namely, the storage apparatus 22 may include a non-transitory recording medium. The storage apparatus 22 is one example of an output unit.

The communication apparatus 23 is configured to transmit and receive a desired information through the communication network 4. In the first example embodiment, the communication apparatus 23 receives the captured image captured by the camera 11 of the imaging apparatus 1 from the imaging apparatus 1 through the communication network 4. Moreover, the communication apparatus 23 receives the captured position information indicating the captured position measured by the position measurement apparatus 12 of the imaging apparatus 1 from the imaging apparatus 1 through the communication network 4. Moreover, the communication apparatus 23 transmits the authentication log and the dissimilarity score to the management server 3 through the communication network 4. The communication apparatus 23 is also one example of the output unit.

### (1-1-4) Configuration of Management Server 3

Next, with reference to FIG. 4, a configuration of the management server 3 will be described. FIG. 4 is a block diagram that illustrates the configuration of the management server 3.

As illustrated in FIG. 3, the management server 3 includes an arithmetic apparatus 31, a storage apparatus 32 and a communication apparatus 33. The arithmetic apparatus 31, the storage apparatus 32 and the communication apparatus 33 are connected through a data bus 34. Note that the management server 3 may be referred to as a "management apparatus".

The arithmetic apparatus 31 includes at least one of a CPU and a GPU, for example. The arithmetic apparatus 31 reads a computer program. For example, the arithmetic apparatus 31 may read a computer program stored in the storage apparatus 32. For example, the arithmetic apparatus 31 may read a computer program stored in a computer-readable recording medium (for example, a non-transitory recording medium), by using a not-illustrated recording medium reading apparatus of the arithmetic apparatus 31. The arithmetic apparatus 31 may obtain (namely, download or read) a computer program from a not-illustrated apparatus placed outside the management server 3 through a communication network interface.

In the first example embodiment, when the arithmetic apparatus 31 executes the read computer program, a logical functional block for performing the log management operation for managing the authentication log is implemented in the arithmetic apparatus 21. Namely, the arithmetic apparatus 31 is configured to serve as a controller for implementing the logical functional block for performing the log management operation.

Specifically, a log extraction unit 311 and an alert control unit 312 are implemented in the arithmetic apparatus 31 as the logical functional block for performing the log management operation. Note that operations of the log extraction unit 311 and the alert control unit 312 will be described later in detail, however, an overview thereof is described here. The log extraction unit 311 extracts, based on the dissimilarity score, the authentication log corresponding to the captured position information that is possibly fake. The alert control unit 312 outputs the alert information for alerting the administrator that the authentication log corresponding to the captured position information that is possibly fake is extracted.

The storage apparatus 32 is an apparatus that is configured to store (namely, record or save) a desired information. Especially in the first example embodiment, the storage apparatus 32 stores an information related to the log management operation. For example, the storage apparatus 32 may store an information related to the authentication log corresponding to the captured position information that is possibly fake. The storage apparatus 32 may include at least one of a ROM (Read Only Memory), a RAM (Random Access Memory), a hard disk apparatus, a magneto-optical disc, a SSD (Solid State Drive) and a disk array apparatus, for example. Namely, the storage apparatus 32 may include a non-transitory recording medium.

The communication apparatus 33 is configured to transmit and receive a desired information through the communication network 4. In the first example embodiment, the communication apparatus 33 receives the authentication log and the dissimilarity score from the authentication server 2 through the communication network 4.

### (1-2) Operation of Authentication System SYSa

Next, an operation of the authentication system SYSa in the first example embodiment will be described.

### (1-2-1) Operation of Imaging Apparatus 1

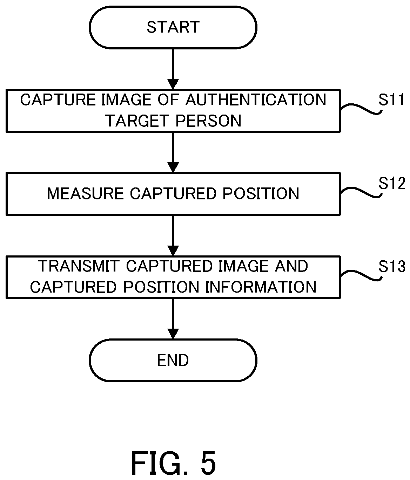

Firstly, with reference to FIG. 5, an operation of the imaging apparatus 1 will be described. FIG. 5 is a flowchart that illustrates the operation of the imaging apparatus 1.

As illustrated in FIG. 5, the camera 11 captures the image of the authentication target person at a timing when the authentication target person is located in the angle of view of the camera 11 (especially, the face of the authentication target person is located in the angle of view of the camera 11) (a step S11). Thus, the imaging apparatus 1 starts the operation illustrated in FIG. 5 every time new authentication target person enters the angle of view of the camera 11. Note that the imaging apparatus 1 may guide the authentication target person the face of the authentication target person is located in the angle of view of the camera 11, in order to properly capture the image of the authentication target person. For example, when the imaging apparatus 1 includes a display apparatus that is one specific example of an output apparatus, the imaging apparatus 1 may guide the authentication target person by displaying an image for guiding the authentication target person on the display apparatus. For example, when the imaging apparatus 1 includes a speaker that is one specific example of the output apparatus, the imaging apparatus 1 may guide the authentication target person by outputting a sound for guiding the authentication target person from the speaker.

When the camera 11 captures the image of the authentication target person, the position measurement apparatus 12 measures the captured position at which the camera 11 captures the image of the authentication target person (a step S12).

Then, the communication apparatus 13 transmits the captured image captured at the step S11 and the captured position information indicating the captured image measured at the step S12 to the authentication server 2 (a step S13).

### (1-2-2) Operation of Authentication Server 2

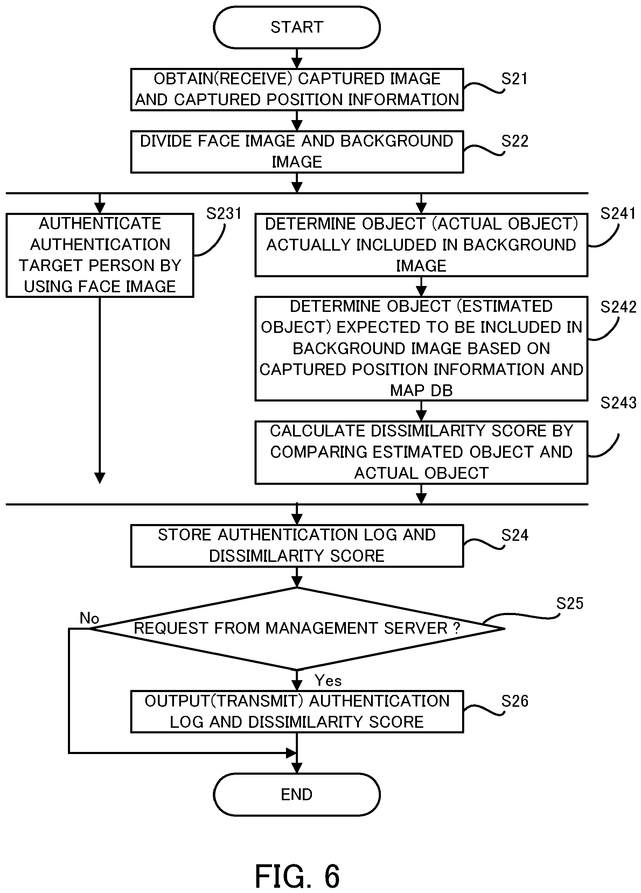

Next, with reference to FIG. 6, an operation of the authentication server 2 will be described. FIG. 6 is a flowchart that illustrates the operation of the authentication server 2.

As illustrated in FIG. 6, the image obtaining unit 210 receives (in other words, obtains) the captured image and the captured position information transmitted from the imaging apparatus 1 through the communication apparatus 23 (a step S21). Thus, the authentication server 2 starts the operation illustrated in FIG. 6 every time the imaging apparatus 1 transmits the captured image and the captured position information. However, an operation from a step S25 to a step S26 described later (specifically, an operation for transmitting the authentication log and the dissimilarity score to the management server 3) may be performed periodically or randomly independently from the transmission of the captured image and the captured position information by the imaging apparatus 1.

Then, the image division unit 211 divides the captured image received at the step S21 into the face image in which the face of the authentication target person is included and the background image in which the background behind the authentication target person is included (step S22). Namely, the image division unit 211 extracts each of the face image and the background image from the captured image. However, the image division unit 211 may determine each of an image part corresponding to the face image and an image part corresponding to the background image in the captured image, instead of dividing the captured image into the face image and the background image. In this case, the image part corresponding to the face image in the captured image is used as the face image and the image part corresponding to the background image in the captured image is used as the background image.

Then, the face authentication unit 212 authenticates the authentication target person by using the face image divided at the step S22 (a step S231). Note that the face authentication unit 212 may use an existing method as a method of authenticating the authentication target person by using the face of the authentication target person. Thus, a detailed description of the method of authenticating the authentication target person by using the face of the authentication target person is omitted, however, one example of the method of authenticating the authentication target person by using the face of the authentication target person will be briefly described here. The face authentication unit 212 determines a feature point of the face included in the face image, for example. Then, the face authentication unit 212 calculates the feature of the face (for example, a feature vector) based on the feature point. Then, the face authentication unit 212 determines whether or not the data related to the face having the feature that is same as the calculated feature is registered in the face DB 221. When the data related to the face having the feature that is same as the calculated feature is registered in the face DB 221, the face authentication unit 212 determines that the authentication target person is a person registered in the face DB 221. In this case, the authentication of the authentication target person is completed normally. On the other hand, when the data related to the face having the feature that is same as the calculated feature is not registered in the face DB 221, the face authentication unit 212 is not capable of determining the authentication target person. In this case, the authentication of the authentication target person is not completed normally.

Note that a result of the authentication at the step S231 may be notified from the authentication server 2 to the imaging apparatus 1. In this case, the authentication target person is capable of properly recognizing whether or not the authentication of the authentication target person is completed normally.

In parallel with, after or before the operation at the step S231, the background recognition unit 213 recognizes (namely, determines) the actual object that is actually included in the background image divided at the step S22 (a step S241). Namely, the background recognition unit 213 recognizes the actual object that is actually included in the background image as at least a part of the background behind the authentication target person (the step S241). Note that the background recognition unit 213 may use an existing method of recognizing an object included in an image as a method of recognizing the actual object that is actually included in the background image. Thus, a detailed description of the method of recognizing the actual object that is actually included in the background image is omitted.

In parallel with, after or before the operation at the step S241, the background comparison unit 214 determines, based on the captured position information and the map DB 222, the expected object that is expected to be included as the background behind the authentication target person in the captured image that is obtained under the assumption that the image of the authentication target person is captured at the captured position indicated by the captured position information obtained at the step S21 (a step S242). Namely, the background comparison unit 214 determines the expected object that is expected to be included in the background image as at least a part of the background behind the authentication target person (the step S242). For example, the background comparison unit 214 determines, as the expected object, an object (for example, at least one of a building, a vehicle, a structural object, a sign, a tree and a landscape) that exists at the captured position or near the captured position based on the captured position information and the map DB 222. Thus, it is preferable that the map DB 222 be a database that stores a map information by which the expected object existing at each position is determinable.

Then, the background comparison unit 214 compares the actual object determined at the step S241 and the expected object determined at the step S242 (a step S243). As a result, the background comparison unit 214 calculates the dissimilarity score indicating the degree of the dissimilarity between the actual object and the expected object (the step S243). The dissimilarity score may be a score that is higher as the degree of the dissimilarity between the actual object and the expected object is larger. The dissimilarity score may be a score that is lower as a degree of a matching (alternatively, a degree of a similarity) between the actual object and the expected object is larger. In this case, it can be said that the dissimilarity score is a score determined based on the degree of the matching (alternatively, the degree of the similarity), and thus, it may be referred to as a matching score (alternatively, a similarity score). The dissimilarity score is an information indicating the compared result, and is one example of an information indicating the dissimilarity.

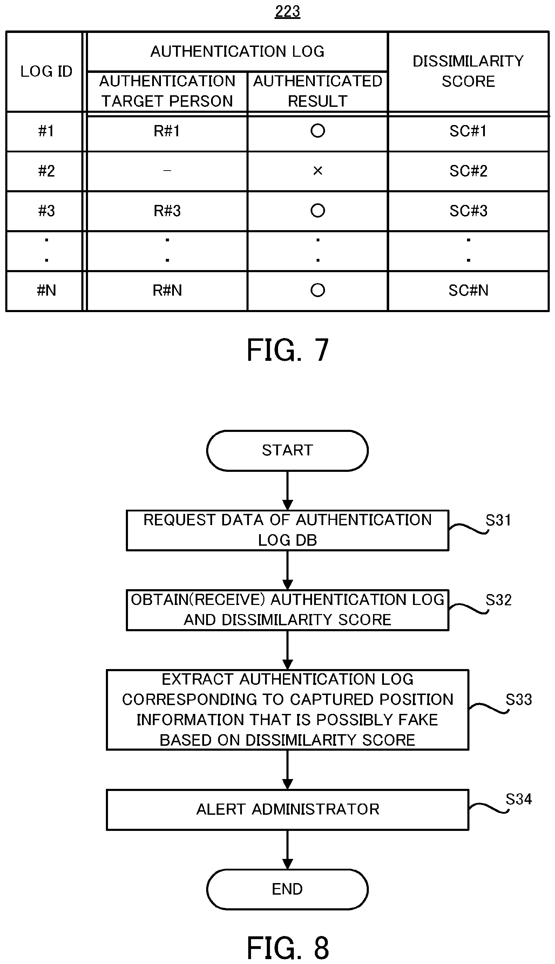

Then, the storage apparatus 22 stores, in the authentication log DB 223, the authentication log indicating the result of the authentication at the step S231 and the dissimilarity score calculated at the step S243 (a step S24). FIG. 7 illustrates one example of a data structure of the authentication log DB 223. As illustrated in FIG. 7, the authentication log DB 223 includes a plurality of records in each of which the authentication log is associated with the dissimilarity score. The authentication log may include an information indicating a person that is determined to be the authentication target person by the face authentication unit 212, for example. The authentication log may include an information indicating whether or not the authentication is completed normally. In FIG. 7, an information indicating that the authentication is completed normally is illustrated by "o" and an information indicating that the authentication is not completed normally is illustrated by "×".

In parallel with, after or before the operations at the step S21 to the step S24, the arithmetic apparatus 21 determines whether or not a transmission request for requesting a transmission of the authentication log and the dissimilarity score to the management server 3 is received from the management server 3 (a step S25).

As a result of the determination at the step S25, when it is determined that the transmission request is not received, the authentication server 2 ends the operation illustrated in FIG. 6.

On the other hand, as a result of the determination at the step S25, when it is determined that the transmission request is received, the communication apparatus 23 transmits (namely, outputs) the authentication log and the dissimilarity score to the management server 3 (a step S26). In this case, the communication apparatus 23 may transmits all of the authentication logs and the dissimilarity scores stored in the authentication log DB 223 to the management server 3. The communication apparatus 23 may transmits a partial information necessary for the management server 3 among all of the authentication logs and the dissimilarity scores stored in the authentication log DB 223 to the management server 3. Thus, the management server 3 may include, in the above described transmission request, an information related to the authentication log and the dissimilarity score necessary for the management server 3. An information for designating a range of the authentication log and the dissimilarity score necessary for the management server 3 by using at least one of a time at which the authentication score is generated and a log ID for identifying the authentication log is one example of the information related to the authentication log and the dissimilarity score necessary for the management server 3, for example.

### (1-2-3) Operation of Management Server 3

Next, with reference to FIG. 8, an operation of the management server 3 will be described. FIG. 8 is a flowchart that illustrates the operation of the management server 3.

As illustrated in FIG. 8, the log extraction unit 311 transmits, to the authentication server 2, the transmission request for requesting the transmission of the data stored in the authentication log DB 223 (namely, the authentication log and the dissimilarity score) from the authentication server 2 to the management server 3 (a step S31). For example, the log extraction unit 311 may transmits the transmission request to the authentication server 2 periodically. For example, the log extraction unit 311 may transmits the transmission request to the authentication server 2 based on an instruction from an administrator of the authentication system SYSa using a non-illustrated input apparatus (for example, at least one of a keyboard, a touch panel and a mouse) of the management server 3. As a result, the communication apparatus 33 receives (namely, obtains) the authentication log and the dissimilarity score transmitted from the authentication server 2 (a step S32).

Then, the log extraction unit 311 extracts, based on the dissimilarity score obtained at the step S32, the authentication log corresponding to the captured position information that is possibly fake from the authentication log obtained at the step S32 (a step S33). Namely, the log extraction unit 311 extracts, based on the dissimilarity score, the authentication log indicating the result of the authentication of the authentication target person by using the captured image that is associated with the captured position information that is possibly fake (the step S33). Next, one example of a method of extracting, based on the dissimilarity score, the authentication log corresponding to the captured position information that is possibly fake will be described.

As described above, the dissimilarity score is an index value indicating the degree of the dissimilarity between the actual object and the expected object. In this case, the dissimilarity score should be relatively high when the captured position information is fake and should be relatively low when the captured position information is not fake. The reason will be described here. Firstly, when the captured position information is fake, there is a high possibility that the authentication target person exists at a position (hereinafter, it is referred to as a "fake position") different from the captured position indicated by the captured position information. Thus, the actual object is an object that is actually included as the background behind the authentication target person in the captured image that is actually obtained by capturing the image of the authentication target person at the face position different from the captured position. On the other hand, the expected object is the expected object that is expected to be included as the background behind the authentication target person in the captured image that is obtained under the assumption that the image of the authentication target person is captured at the captured position different from the fake position. As a result, since the captured position is different from the fake position, there is a low possibility that the expected object corresponding to an object located at the captured position is same as the actual object corresponding to an object located at the fake position. Thus, when the captured position information is fake, the degree of the dissimilarity between the actual object and the expected object should be relatively high. On the other hand, when the captured position information is not fake, both of the expected object and the actual object indicate the object located at the captured position. Thus, there is a high possibility that the expected object corresponding to the object located at the captured position is same as the actual object corresponding to the object located at the same captured position. Therefore, there is a high possibility that the dissimilarity score is relatively high when the captured position information is fake and is relatively low when the captured position information is not fake.

The log extraction unit 311 extracts, based on the dissimilarity score, the authentication log corresponding to the captured position information that is possibly fake, by using this characteristic of the dissimilarity score. For example, the log extraction unit 311 may extracts, as the authentication log corresponding to the captured position information that is possibly fake, the authentication log that is associated with the dissimilarity score higher than a first predetermined threshold value. It is preferable that the first predetermined threshold value be set to be a proper value that allows the dissimilarity score calculated based on the captured image associated with the captured position information that is possibly (alternatively, that has a high possibility to be) fake from the dissimilarity score calculated based on the captured image associated with the captured position information that has no possibility (alternatively, that has a low possibility) to be fake. Alternatively, for example, the log extraction unit 311 may sort the authentication logs by using the dissimilarity score (for example, sort them in a descending order of the dissimilarity score), and extracts, as the authentication log corresponding to the captured position information that is possibly fake, the top N (note that N is an integer that is equal to or larger than 1) authentication log having the relatively higher dissimilarity score. Namely, the log extraction unit 311 may extracts, as the authentication log corresponding to the captured position information that is possibly fake, at least one authentication log associated with the relatively higher dissimilarity score from the plurality of authentication logs obtained at the step S32. Note that the information related to the authentication log corresponding to the captured position information that is possibly fake may be stored in the storage apparatus 32.

Then, when the authentication log corresponding to the captured position information that is possibly fake is extracted at the step S32, the alert control unit 312 outputs the alert information for alerting the administrator that the authentication log corresponding to the captured position information that is possibly fake is extracted (a step S34). For example, the alert control unit 312 may control a display apparatus, which is one example of an output apparatus of the management server 3, to display an image for alerting that the authentication log corresponding to the captured position information that is possibly fake is extracted. For example, the alert control unit 312 may control a speaker, which is one example of an output apparatus of the management server 3, to output a sound for alerting that the authentication log corresponding to the captured position information that is possibly fake is extracted.

However, the alert control unit 312 may not necessarily output the alert information for alerting the administrator that the authentication log corresponding to the captured position information that is possibly fake is extracted. In this case, the administrator may recognize whether or not the authentication log corresponding to the captured position information that is possibly fake is extracted by using the information stored in the storage apparatus 32 (specifically, the information related to the authentication log corresponding to the captured position information that is possibly fake is extracted).

### (1-3) Technical Effect of Authentication System SYSa

As described above, the authentication system SYSa in the first example embodiment is capable of calculating the dissimilarity score as the information that is usable to determine whether or not the captured position information that is possibly fake. Thus, the management server 3 is capable of determining based on the dissimilarity score whether or not the captured position information is possibly fake. In other words, the management server 3 is capable of extracting, based on the dissimilarity score, the authentication log corresponding to the captured position information that is possibly fake. As a result, the administrator of the authentication system SYSa is capable of properly taking a necessary action against the fake of the captured position information.

### (2) Authentication System SYSb in Second Example Embodiment

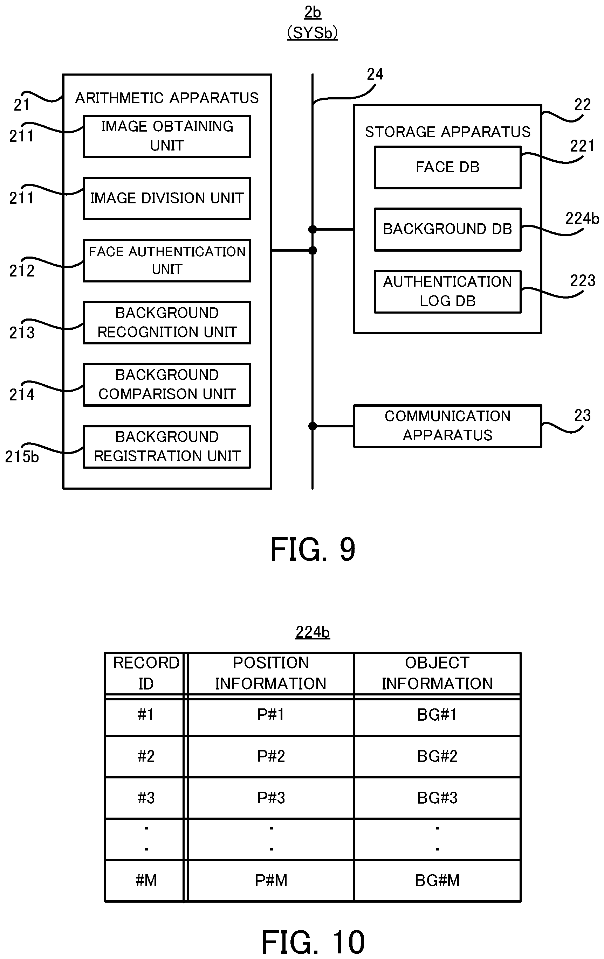

Next, an authentication system SYS in a second example embodiment (hereinafter, the authentication system SYS in the second example embodiment is referred to as an "authentication system SYSb") will be described. The authentication system SYSb in the second example embodiment is different from the authentication system SYSa in the first example embodiment in that it includes an authentication server 2b instead of the authentication server 2. The rest of the feature of the authentication system SYSb may be same as the rest of the feature of the authentication system SYSa. Thus, in the below described description, with reference to FIG. 9, the authentication server 2b in the second example embodiment will be described. FIG. 9 is a block diagram that illustrates a configuration of the authentication server 2b in the second example embodiment.

As illustrated in FIG. 9, the authentication server 2b in the second example embodiment is different from the authentication server 2 in the first example embodiment in that the storage apparatus 22 stores a background DB 224b in addition to or instead of the map DB 222. Furthermore, the authentication server 2b in the second example embodiment is different from the authentication server 2 in the first example embodiment in that a background registration unit 215b is implemented in the arithmetic apparatus 21. The rest of the feature of the authentication server 2b may be same as the rest of the feature of the authentication server 2. The background DB 224b is one example of a second information in which the position information is associated with the actual background information. Moreover, the background DB 224b is one example of a third information in which the captured position is associated with an information related to a background that is actually included in an image obtained by capturing an image at the captured position. Both of the second information and the third information are included in the reference information that should be used to determine the expected background information from the position information.

The background DB 224b is a database that stores an object information used by the background comparison unit 214 to determine the expected object. One example of a data structure of the background DB 224b is illustrated in FIG. 10. As illustrated in FIG. 10, the background DB 224b includes a plurality of records in each of which the position information indicating one position is associated with an object information indicating an object included in the background image that is obtained from the captured image that is actually captured by the camera 11 (alternatively, a camera outside the authentication system SYSb) located at the one position.

In the second example embodiment, the background comparison unit 214 determines the expected object based on the background DB 224b at the step S242 in FIG. 6. Specifically, the background comparison unit 214 obtains the object information that is associated with the position information indicating the position that is same as the captured position indicated by the captured position information, and determines, as the expected object, the object indicated by the obtained object information. The rest of the operation in the second example embodiment may be same as the rest of the operation in the first example embodiment (namely, the operation illustrated in FIG. 5, FIG. 6 and FIG. 8). Thus, a detailed description of the rest of the operation of the authentication system SYSb in the second example embodiment is omitted.

At least one of the plurality of records included in the background DB 224b may be a record in which the captured position information that is actually obtained by the authentication server 2 from the imaging apparatus 1 is associated with the object information indicating the actual object that is actually determined by the authentication server 2. In this case, the background registration unit 215b registers, in the background DB 224b, a record in which the captured position information that is actually obtained by the authentication server 2 from the imaging apparatus 1 is associated with the object information indicating the actual object that is actually determined by the authentication server 2.

At least one of the plurality of records included in the background DB 224b may be a record in which the object information indicating an object that is actually included as at least a part of the background in an image that is obtained by an optional camera capturing an image of a scene included in the angle of view of the camera 11 is associated with the position information indicating a position of this optional camera (namely, a captured position of this optional camera). Namely, at least one of the plurality of records included in the background DB 224b may be a record in which the position information indicating the captured position of the camera 11 is associated with the object information indicating the object that is actually included as at least a part of the background in a captured image captured by the optional camera located at the captured position of the camera 11. Note that the optional camera may not necessarily capture the image of the authentication target person. In this case, the background recognition unit 213 may recognize the object that is actually included as at least a part of the background in the captured image captured by the optional camera. The background registration unit 215b registers, in the background DB 224b, a record in which the captured position information indicating the capture position of the optional camera is associated with the object information indicating the object that is actually determined by the background recognition unit 213 from the image captured by the optional camera.

The authentication system SYSb in the second example embodiment is capable of achieving an effect that is same as the effect achievable by the authentication system SYSa in the first example embodiment. Moreover, the authentication system SYSb is capable of determining the expected object by using the background DB224b that includes the object information indicating the object included as the background in the actually captured image. Thus, the authentication system SYSb is capable of determining the expected object more accurately.

Moreover, even when the number of times of capturing the image of the authentication target person by the camera 11 is small yet because only short time has elapsed after the authentication operation is started, the object information indicating the object included as the background in the image that is actually captured by the optional camera different from the camera 11 can be registered in the background DB 224b. Thus, even when the number of times of capturing the image of the authentication target person by the camera 11 is small yet, the authentication system SYSb is capable of determining the expected object more accurately by using the background DB 224b.

### (3) Authentication System SYSc in Third Example Embodiment

Next, an authentication system SYS in a third example embodiment (hereinafter, the authentication system SYS in the third example embodiment is referred to as an "authentication system SYSc") will be described. The authentication system SYSc in the third example embodiment is different from the authentication system SYSa in the first example embodiment in that it includes an imaging apparatus 1c instead of the imaging apparatus 1. The rest of the feature of the authentication system SYSc may be same as the rest of the feature of the authentication system SYSa. Thus, in the below described description, with reference to FIG. 10, the imaging apparatus 1c in the third example embodiment will be described. FIG. 10 is a block diagram that illustrates a configuration of the imaging apparatus 1c in the third example embodiment.

As illustrated in FIG. 10, the imaging apparatus 1c in the third example embodiment is different from the imaging apparatus 1 in the first example embodiment in that it includes an orientation measurement apparatus 14c, a date and time measurement apparatus 15c and an altitude measurement apparatus 16c. The rest of the feature of the imaging apparatus 1c may be same as the rest of the feature of the imaging apparatus 1. However, the imaging apparatus 1c may not include at least one of the orientation measurement apparatus 14c, the date and time measurement apparatus 15c and the altitude measurement apparatus 16c.

The orientation measurement apparatus 14c is an apparatus that measures a captured orientation of the camera when the camera 11 captures the image of the authentication target person. The captured orientation means an orientation toward which the camera 11 faces. The orientation toward which the camera 11 faces means an orientation (namely, a direction) toward which an imaging range of the camera 11 spreads from the camera 11. The orientation measurement apparatus 14c may measure the captured orientation by using a geomagnetic sensor, for example. However, the orientation measurement apparatus 14c may measure the captured orientation by using another method.

The date and time measurement apparatus 15c is an apparatus that measures a captured data and time at which the camera 11 captures the image of the authentication target person. The date and time measurement apparatus 15c may measure the captured date and time by using a clock, for example. When the position measurement apparatus 12 uses the GPS, the date and time measurement apparatus 15c may measure the captured date and time by using a time information transmitted from a GPS satellite, for example. However, the date and time measurement apparatus 15c may measure the captured date and time by using another method.

The altitude measurement apparatus 16c is an apparatus that measures a captured altitude at which the camera 11 captures the image of the authentication target person (namely, an altitude of the position at which the camera 11 is located). The altitude measurement apparatus 16c may measure the captured altitude by using the GPS, for example. The altitude measurement apparatus 16c may measure the captured altitude by using a barometer, for example. However, the altitude measurement apparatus 16c may measure the captured altitude by using another method.

In the third example embodiment, the orientation measurement apparatus 14c may measure the captured orientation at the step S12 in FIG. 5. The date and time measurement apparatus 15c may measure the captured date and time at the step S12 in FIG. 5. The altitude measurement apparatus 16c may measure the captured altitude at the step S12 in FIG. 5. Furthermore, at the step S13 in FIG. 5, the communication apparatus 13 transmits at least one of a captured orientation information indicating the captured orientation, a captured date and time information indicating the captured date and time, a captured altitude information indicating the captured altitude to the authentication server 2, in addition to the captured image and the captured position information. Namely, in the third example embodiment, the captured image is transmitted from the imaging apparatus 1c to the authentication server 2 in a state where it is associated with (in other words, linked with) at least one of the captured orientation information, the captured date and time information and the captured altitude information, in addition to the captured position information. Furthermore, at the step S21 in FIG. 6, the communication apparatus 23 receives the captured image, the captured position information and at least one of the captured orientation information, the captured date and time information and the captured altitude information transmitted from the imaging apparatus 1. Furthermore, at the step S241 in FIG. 6, the background comparison unit 214 determines the expected object based on the captured position information, the map DB 222 and at least one of the captured orientation information, the captured date and time information and the captured altitude information. The rest of the operation in the third example embodiment may be same as the rest of the operation in the first example embodiment (namely, the operation illustrated in FIG. 5, FIG. 6 and FIG. 8). Thus, a detailed description of the rest of the operation of the authentication system SYSc in the third example embodiment is omitted.

The authentication system SYSc in the third example embodiment is capable of achieving an effect that is same as the effect achievable by the authentication system SYSa in the first example embodiment.

Moreover, the authentication system SYSc is capable of determining the expected object based on not only the captured position information but also at least one of the captured orientation information, the captured date and time information and the captured altitude information. Thus, the authentication system SYSc is capable of determining the expected object more accurately. Specifically, there is a possibility that the expected object that is expected to be included in the background image changes depending on the captured orientation of the camera 11, for example. As one example, there is a possibility that the expected object that is expected to be included as the background in the captured image captured by the camera 11 directed toward north at a certain position is different from the expected object that is expected to be included as the background in the captured image captured by the camera 11 directed south at the same position. Thus, the authentication system SYSc is capable of determining the expected object more accurately by using the captured orientation information.

Additionally, when the captured date and time information is used, there is a possibility that the authentication system SYSc is capable of determining the expected object more accurately, compared to the case where the captured date and time information is not used. When the captured altitude information is used, there is a possibility that the authentication system SYSc is capable of determining the expected object more accurately, compared to the case where the captured altitude information is not used. However, the captured date and time information and the captured altitude information is more beneficial to a usage for determining an expected weather described in a fourth example embodiment (specifically, a weather that is expected to be a weather at the captured position when the image of the authentication target person is captured) rather than to a usage for determining the expected object.

Incidentally, when the imaging apparatus 1c includes the orientation measurement apparatus 14c, the authentication server 2 is capable of determining the captured orientation of the camera 11. In this case, when the captured orientation determined is not a desired orientation, the authentication server 2 may control the imaging apparatus 1c (especially, the above described output apparatus of the imaging apparatus 1c) to output an instruction for guiding the authentication target person to direct the camera 11 toward the desired orientation. As a result, the authentication server 2 is capable of obtaining the captured image captured by the camera 11 directed to the desired orientation that is expected by the authentication server 2.

Moreover, the authentication system SYSb in the second example embodiment may include an characteristic feature of the authentication system SYSc in the third example embodiment. The characteristic feature of the authentication system SYSc in the third example embodiment includes a feature related to at least one of the captured orientation, the captured date and time and the captured altitude.

### (4) Authentication System SYSd in Fourth Example Embodiment

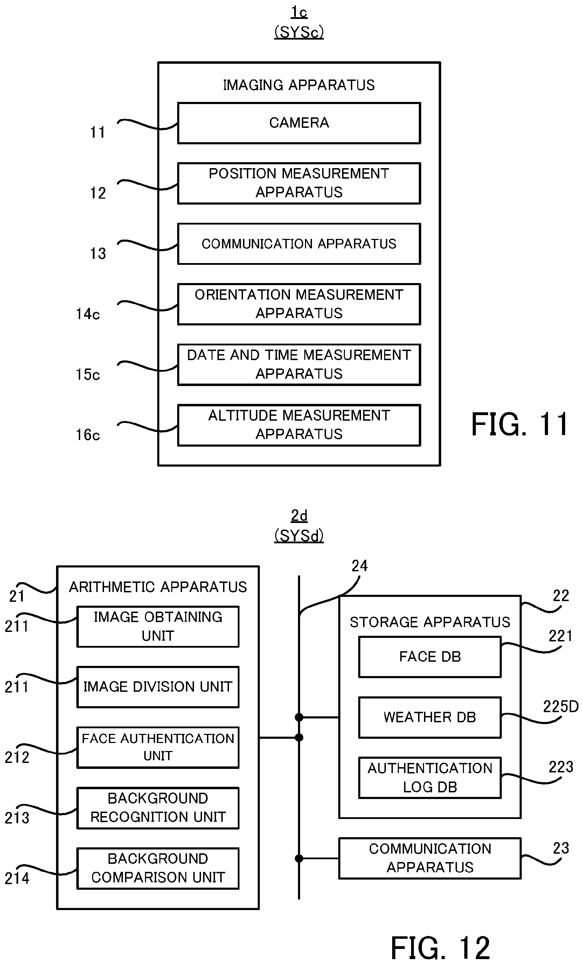

Next, an authentication system SYS in a fourth example embodiment (hereinafter, the authentication system SYS in the fourth example embodiment is referred to as an "authentication system SYSd") will be described. The authentication system SYSd in the fourth example embodiment is different from the authentication system SYSa in the first example embodiment in that it includes an authentication server 2d instead of the authentication server 2. Furthermore, the authentication system SYSd is different from the authentication system SYSa in that it includes the imaging apparatus 1c (especially, the imaging apparatus 1c including the date and time measurement apparatus 15c) in the third example embodiment. The rest of the feature of the authentication system SYSd may be same as the rest of the feature of the authentication system SYSa. Thus, in the below described description, with reference to FIG. 12, the authentication server 2d in the fourth example embodiment will be described. FIG. 12 is a block diagram that illustrates a configuration of the authentication server 2d in the fourth example embodiment.

As illustrated in FIG. 12, the authentication server 2d in the fourth example embodiment is different from the authentication server 2 in the first example embodiment in that the storage apparatus 22 stores a weather DB 225d in addition to or instead of the map DB 222. Furthermore, the authentication server 2d is different from the authentication server 2 in that it calculates a dissimilarity score indicating a degree of a dissimilarity between an actual weather and an expected weather in addition to or instead of the dissimilarity score indicating the degree of the dissimilarity between the actual object and the expected object. Note that the actual weather is a weather determinable from the background behind the authentication target person that is actually included in the captured image actually obtained by the camera 11 capturing the image of the authentication target person. Namely, the actual weather is a weather determinable from the background image that is divided from the captured image actually obtained by the camera 11 capturing the image of the authentication target person. On the other hand, the expected weather is a weather that is expected as a weather at the captured position when the image of the authentication target person is captured. The rest of the feature of the authentication server 2d may be same as the rest of the feature of the authentication server 2. An information indicating the actual weather corresponds to one example of the above described actual background information related to the background that is actually included in the captured image. An information indicating the expected weather corresponds to one example of the above described expected background information related to the background behind the authentication target person that is expected to be included in the captured image when the image of the authentication target person is captured at the captured position indicated by the above described captured position information.

The weather DB 225d is a database that stores a weather information used by the background comparison unit 214 to determine the expected weather. For example, the weather DB 225d includes a plurality of records in each of which a position information indicating one position, a date and time information indicating one date and time and a weather information indicating an actual weather at the one position on the one date and time are associated with one another. The weather DB 225d is one example of a fourth information in which the captured position is associated with an information related to a status of the captured position. The fourth information is also included in the reference information that should be used to determine the expected background information from the position information. The fourth information in the present example embodiment includes an information in which the captured position is associated with an information related to the weather at the captured position.

In the fourth example embodiment, the date and time measurement apparatus 15c measures the captured date and time at the step S12 in FIG. 5. Furthermore, at the step S13 in FIG. 5, the communication apparatus 13 transmits the captured date and time information in addition to the captured image and the captured position information to the authentication server 2. Furthermore, at the step S21 in FIG. 6, the communication apparatus 23 receives the captured image, the captured position information and the captured date and time information transmitted from the imaging apparatus 1. Furthermore, at the step S241 in FIG. 6, the background recognition unit 213 recognizes (namely, determines) the actual weather that is determinable from the background image divided from the captured image. Furthermore, at the step S242 in FIG. 6, the background comparison unit 214 determines the expected weather based on the captured position information, the captured date and time information and the weather DB 225d. Specifically, the background comparison unit 214 obtains the weather information that is associated with the position information indicating the position same as the captured position indicated by the captured position information and that is associated with the date and time information indicating the date and time same as the captured date and time indicated by the captured date and time information, and determines, as the expected weather, the weather indicated by the obtained weather information. Furthermore, at the step S243 in FIG. 6, the background comparison unit 214 calculates the dissimilarity score indicating the degree of the dissimilarity between the actual weather and the expected weather. The dissimilarity score may be a score that is higher as the degree of the dissimilarity between the actual weather and the expected weather is larger. The dissimilarity score may be a score that is lower as a degree of a matching (alternatively, a degree of a similarity) between the actual weather and the expected weather is larger. The rest of the operation in the fourth example embodiment may be same as the rest of the operation in the first example embodiment (namely, the operation illustrated in FIG. 5, FIG. 6 and FIG. 8). Thus, a detailed description of the rest of the operation of the authentication system SYSd in the fourth example embodiment is omitted.

The authentication system SYSd in the fourth example embodiment is capable of achieving an effect that is same as the effect achievable by the authentication system SYSa in the first example embodiment. Namely, the authentication system SYSd is capable of determining by using the dissimilarity score indicating the degree of the dissimilarity between the actual weather and the expected weather whether or not the captured position information is possibly fake in a same manner as the case where the dissimilarity score indicating the degree of the dissimilarity between the actual object and the expected object is used. This is because there is a high possibility that the dissimilarity score is relatively high when the captured position information is fake and is relatively low when the captured position information is not fake even in the fourth example embodiment, as with the first example embodiment. Next, the reason will be described.

Firstly, when the captured position information is fake, there is a high possibility that the authentication target person exists at the fake position different from the captured position indicated by the captured position information. Thus, the actual weather is a weather at the fake position different from the captured position. On the other hand, the expected weather is a weather at the captured position different from the fake position. As a result, since the captured position is different from the fake position, there is a low possibility that the expected weather corresponding to the weather at the captured position is same as the actual weather corresponding to the weather at the fake position. Thus, when the captured position information is fake, the degree of the dissimilarity between the actual weather and the expected weather should be relatively high. On the other hand, when the captured position information is not fake, both of the expected weather and the actual weather are the weather at the captured position. Thus, there is a high possibility that the expected weather corresponding to the weather at the captured position is same as the actual weather corresponding to the weather at the same captured position. Therefore, there is a high possibility that the dissimilarity score is relatively high when the captured position information is fake and is relatively low when the captured position information is not fake.

Note that there is a possibility that the captured altitude affects the weather. For example, the weather at the captured position having relatively high altitude is likely snow compared to the weather at the captured position having relatively low altitude. Therefore, there is a possibility that the authentication system SYSd is capable of determining the expected weather more accurately by using the captured altitude information, compared to the case where the captured altitude information is not used. Therefore, in the forth example embodiment, the imaging apparatus 1c may includes the altitude measurement apparatus 16c and the background comparison unit 214 may determine the expected weather by using the captured altitude information.

Moreover, at least one of the authentication system SYSb in the second example embodiment and the authentication system SYSc in the third example embodiment may include an characteristic feature of the authentication system SYSd in the fourth example embodiment. The characteristic feature of the authentication system SYSd in the fourth example embodiment includes a feature related to the weather.

### (5) Authentication System SYSe in Fifth Example Embodiment

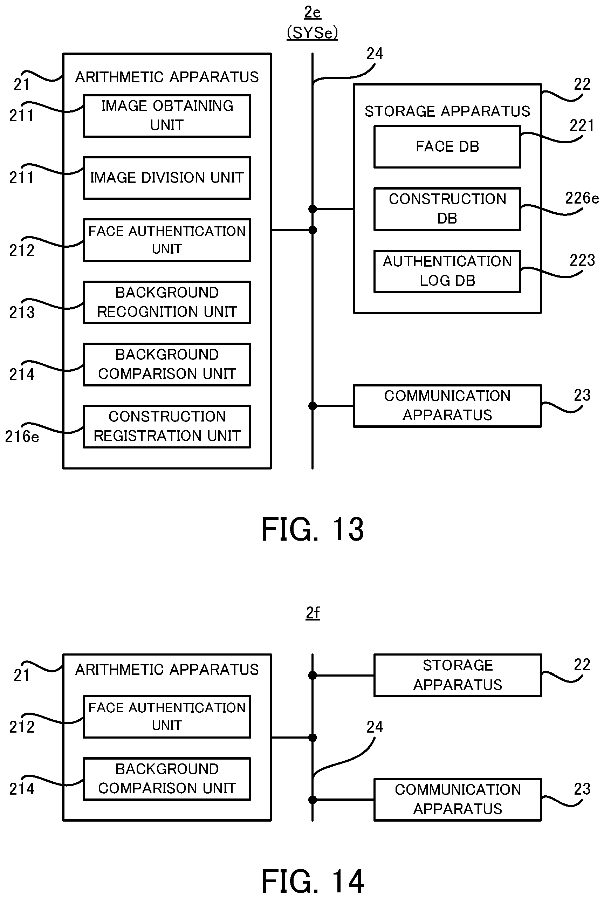

Next, an authentication system SYS in a fifth example embodiment (hereinafter, the authentication system SYS in the fifth example embodiment is referred to as an "authentication system SYSe") will be described. The authentication system SYSe in the fifth example embodiment is different from the authentication system SYSa in the first example embodiment in that it includes an authentication server 2e instead of the authentication server 2. Furthermore, the authentication system SYSe is different from the authentication system SYSa in that it includes the imaging apparatus 3c (especially, the imaging apparatus 3c including the date and time measurement apparatus 15c) in the third example embodiment. Furthermore, the authentication system SYSe is different from the authentication system SYSa, in which the imaging apparatus 1c may not be located at a construction site, in that the imaging apparatus 1c is located at the construction site (namely, the captured position of the camera 11 is included in the construction site). The rest of the feature of the authentication system SYSe may be same as the rest of the feature of the authentication system SYSa. Thus, in the below described description, with reference to FIG. 13, the authentication server 2e in the fifth example embodiment will be described. FIG. 13 is a block diagram that illustrates a configuration of the authentication server 2e in the fifth example embodiment.

As illustrated in FIG. 13, the authentication server 2e in the fifth example embodiment is different from the authentication server 2 in the first example embodiment in that the storage apparatus 22 stores a construction DB 226e in addition to or instead of the map DB 222. Furthermore, the authentication server 2e is different from the authentication server 2 in that a construction registration unit 216e is implemented in the arithmetic apparatus 21. Furthermore, the authentication server 2e is different from the authentication server 2 in that it calculates a dissimilarity score indicating a degree of a dissimilarity between an actual construction status and an expected construction status in addition to or instead of the dissimilarity score indicating the degree of the dissimilarity between the actual object and the expected object. Note that the actual construction status is a progress status of the construction determinable from the background behind the authentication target person that is actually included in the captured image actually obtained by the camera 11 capturing the image of the authentication target person. The expected construction status is a progress status of the construction determinable from the background behind the authentication target person that is expected to be included in the captured position when the camera 11 captures the image of the authentication target person. Namely, the expected construction status is construction status that is expected as an actual progress status of the construction at a timing when the image of the authentication target person is captured at the construction site. An information indicating the actual construction status corresponds to one example of the above described actual background information related to the background that is actually included in the captured image. An information indicating the expected construction status corresponds to one example of the above described expected background information related to the background behind the authentication target person that is expected to be included in the captured image when the image of the authentication target person is captured at the captured position indicated by the above described captured position information. Note that the progress status of the construction indicates a progress of the construction that is determinable from a status of a building that is built or constructed at the construction site, a status of an equipment used at the construction site and a status of a material used at the construction site, for example. The rest of the feature of the authentication server 2e may be same as the rest of the feature of the authentication server 2.

The construction DB 226e is a database that stores a construction information used by the background comparison unit 214 to determine the expected construction status. For example, the construction DB 226e includes a plurality of records in each of which a position information indicating one position, a date and time information indicating one date and time and a construction information indicating the progress status of the construction site at the one position on the one date and time are associated with one another. The construction DB 226e is also one example of the fourth information in which the captured position is associated with the information related to the status of the captured position. The fourth information in the present example embodiment includes an information in which the position of the construction site is associated with an information related to the progress status of the construction in the construction site.

In the fifth example embodiment, the date and time measurement apparatus 15c measures the captured date and time at the step S12 in FIG. 5. Furthermore, at the step S13 in FIG. 5, the communication apparatus 13 transmits the captured date and time information in addition to the captured image and the captured position information to the authentication server 2. Furthermore, at the step S21 in FIG. 6, the communication apparatus 23 receives the captured image, the captured position information and the captured date and time information transmitted from the imaging apparatus 1c. Furthermore, at the step S241 in FIG. 6, the background recognition unit 213 recognizes (namely, determines) the actual construction status that is determinable from the background image divided from the captured image. Furthermore, at the step S242 in FIG. 6, the background comparison unit 214 determines the expected construction status based on the captured position information, the captured date and time information and the construction DB 226e. Specifically, the background comparison unit 214 obtains the construction information that is associated with the position information indicating the position same as the captured position indicated by the captured position information and that is associated with the date and time information indicating the date and time same as the captured date and time indicated by the captured date and time information, and determines, as the expected construction status, the progress status of the construction indicated by the obtained construction information. Furthermore, at the step S243 in FIG. 6, the background comparison unit 214 calculates the dissimilarity score indicating the degree of the dissimilarity between the actual construction status and the expected construction status. The dissimilarity score may be a score that is higher as the degree of the dissimilarity between the actual construction status and the expected construction status is larger. The dissimilarity score may be a score that is lower as a degree of a matching (alternatively, a degree of a similarity) between the actual construction status and the expected construction status is larger. The rest of the operation in the fifth example embodiment may be same as the rest of the operation in the first example embodiment (namely, the operation illustrated in FIG. 5, FIG. 6 and FIG. 8). Thus, a detailed description of the rest of the operation of the authentication system SYSe in the fifth example embodiment is omitted.

At least one of the plurality of records included in the construction server 226e may be a record in which the captured position information that is actually obtained by the authentication server 2 from the imaging apparatus 1c, the captured date and time information that is actually obtained by the authentication server 2 from the imaging apparatus 1c and the construction information indicating the actual construction status that is actually determined by the authentication server 2 are associated with one another. In this case, the construction registration unit 216e registers, in the construction DB 226e, record in which the captured position information that is actually obtained by the authentication server 2 from the imaging apparatus 1c, the captured date and time information that is actually obtained by the authentication server 2 from the imaging apparatus 1c and the construction information indicating the actual construction status that is actually determined by the background recognition unit 213 are associated with one another.

At least one of the plurality of records included in the construction DB 226e may be a record in which a construction information indicating the progress status of the construction that is determinable from the background included an image that is obtained by an optional camera capturing an image of a scene of the construction site included in the angle of view of the camera 11, the position information indicating a position of this optional camera (namely, a captured position of this optional camera) and the date and time information indicating a date and time at which the optional camera captures the image of the construction site (namely, the captured date and time of this optional camera) are associated with one another. Namely, at least one of the plurality of records included in the construction DB 226e may be a record in which the position information indicating the captured position of the camera 11, a construction information indicating the progress status of the construction determinable from the image that is actually obtained by the optional camera located at the captured position of the camera 11 and the date and time information indicating the date and time at which the optional camera captures the image of the construction site are associated with one another. Note that the optional camera may not necessarily capture the image of the authentication target person. In this case, the background recognition unit 213 may recognize the progress status of the construction site from the background included in the image captured by the optional camera. The construction registration unit 216e registers, in the construction DB 226e, a record in which the position information indicating the captured position of the optional camera, the date and time information indicating the captured date and time of the optional camera and the construction information indicating the progress status of the construction that is actually determined by the background recognition unit 213 from the image captured by the optional camera are associated with one another.

The authentication system SYSe in the fifth example embodiment is capable of achieving an effect that is same as the effect achievable by the authentication system SYSa in the first example embodiment. Namely, the authentication system SYSe is capable of determining by using the dissimilarity score indicating the degree of the dissimilarity between the actual construction status and the expected construction status whether or not the captured position information is possibly fake in a same manner as the case where the dissimilarity score indicating the degree of the dissimilarity between the actual object and the expected object is used. This is because there is a high possibility that the dissimilarity score is relatively high when the captured position information is fake and is relatively low when the captured position information is not fake even in the fifth example embodiment, as with the first example embodiment. Next, the reason will be described.

Firstly, when the captured position information is fake, there is a high possibility that the authentication target person exists at the fake position different from the captured position indicated by the captured position information. Thus, the actual construction status is a progress status of the construction in the construction site at the fake position different from the captured position. Alternatively, there is no construction site at the fake position (namely, the fake position is a position different from the position of the construction site), the actual construction status does not indicate the progress status of the construction in the construction site at all. On the other hand, the expected construction status is a progress status of the construction in the construction site at the captured position different from the fake position. As a result, since the captured position is different from the fake position, there is a low possibility that the expected construction site corresponding to the progress status of the construction in the construction site at the captured position is same as the actual construction status corresponding to the progress status of the construction in the construction site at the fake position. Thus, when the captured position information is fake, the degree of the dissimilarity between the actual construction status and the expected construction status should be relatively high. On the other hand, when the captured position information is not fake, both of the expected construction status and the actual construction status are the progress status of the construction in the construction site at the captured position. Thus, there is a high possibility that the expected construction site corresponding to the progress status of the construction in the construction site at the captured position is same as the actual construction status corresponding to the progress status of the construction in the construction site at the same captured position. Therefore, there is a high possibility that the dissimilarity score is relatively high when the captured position information is fake and is relatively low when the captured position information is not fake.

Note that the progress status of the construction changes as time proceeds. Thus, the authentication system SYSe may determine by using the dissimilarity score indicating the degree of the dissimilarity between the actual construction status and the expected construction status whether not only the captured position information but also the captured date and time information is fake or not. Next, the reason will be described. When the captured date and time information is fake, there is a high possibility that the authentication target person is captured by the camera 11 on the date and time (hereinafter, it is referred to as a "fake date and time") different from the captured date and time indicated by the captured date and time information. Thus, the actual construction status is a progress status of the construction in the construction site on the fake date and time different from the captured date and time. On the other hand, the expected construction status is a progress status of the construction in the construction site on the captured date and time different from the fake date and time. As a result, since the captured date and time is different from the fake date and time, there is a low possibility that the expected construction site corresponding to the progress status of the construction in the construction site on the captured date and time is same as the actual construction status corresponding to the progress status of the construction in the construction site on the fake date and time. Thus, when the captured date and time information is fake, the degree of the dissimilarity between the actual construction status and the expected construction status should be relatively high. On the other hand, when the captured date and time information is not fake, both of the expected construction status and the actual construction status are the progress status of the construction in the construction site on the captured date and time. Thus, there is a high possibility that the expected construction site corresponding to the progress status of the construction in the construction site on the captured date and time is same as the actual construction status corresponding to the progress status of the construction in the construction site on the same captured date and time. Therefore, there is a high possibility that the dissimilarity score is relatively high when the captured date and time information is fake and is relatively low when the captured date and time information is not fake.

Moreover, it can be said that the construction DB 226e in the fifth example embodiment is similar to the weather DB 225d indicating the weather, which is one example of the status of the captured position of the camera 11, in the fourth example embodiment in that it indicates the status of the captured position of the camera 11. Thus, the storage apparatus 22 may store a status DB that includes a plurality of records each of which includes a position information indicating one position and a status information indicating the status of the one position, in addition to or instead of at least one of the weather DB 225d and the construction DB 226e.

Moreover, at least one of the authentication system SYSb in the second example embodiment to the authentication system SYSd in the fifth example embodiment may include an characteristic feature of the authentication system SYSe in the fifth example embodiment. The characteristic feature of the authentication system SYSe in the fifth example embodiment includes a feature related to the construction.

### (6) Modified Example

In the above described description, the authentication server 2 includes the image division unit 211. However, as illustrated in FIG. 14, an authentication server 2f in a modified example may not include the image division unit 211. In this case, the face authentication unit 212 may authenticates the authentication target person by using the captured image. The background recognition unit 213 may recognize the actual object (alternatively, the actual weather or the actual construction status) by using the captured image.

In the above described description, the authentication server 2 includes the background recognition unit 213. However, as illustrated in FIG. 14, an authentication server 2f in the modified example may not include the background recognition unit 213. In this case, the background comparison unit 214 may determine the actual object (alternatively, the actual weather or the actual construction status) by using the captured image or the background image, and calculate the dissimilarity score indicating the degree of the dissimilarity between the determined actual object (alternatively, the actual weather or the actual construction status) and the expected object (alternatively, the expected weather or the expected construction status).

In the above described description, the face DB 221, the map DB 222, the authentication log DB 223, the background DB 224b, the weather DB 225d and the construction DB 226e are stored in the storage apparatus 22 of the authentication server 2. However, as illustrated in FIG. 14, all of (alternatively, a part of) the face DB 221, the map DB 222, the authentication log DB 223, the background DB 224b, the weather DB 225d and the construction DB 226e may not be stored in the storage apparatus 22 of an authentication server 2 in the modified example. At least one of the face DB 221, the map DB 222, the authentication log DB 223, the background DB 224b, the weather DB 225d and the construction DB 226e may be stored in an external storage apparatus (for example, a cloud server).

In the above described description, the management server 3 includes the log extraction unit 311 and the alert control unit 312. However, the authentication server 2 may include at least one of the log extraction unit 311 and the alert control unit 312. In this case, the storage apparatus 22 of the authentication server 2 may output data stored in the authentication log DB 223 (namely, the authentication log and the dissimilarity score) to the log extraction unit 311 of the authentication server 2 through the data bus 24. Moreover, the management server 3 may not include at least one of the log extraction unit 311 and the alert control unit 312. Moreover, the authentication system SYS may not include the management server 3.

### (7) Supplementary Note

With respect to the example embodiments described above, the following Supplementary Notes will be further disclosed. A part or whole of the above described example embodiment may be described as the Supplementary Note described below, however, is not limited to the below description.

### [Supplementary Note 1]

An authentication apparatus including:
an obtaining unit that is configured to obtain a captured image obtained by capturing an image of an authentication target person together with a position information indicating a captured position at which the image of the authentication target person is captured;
an authentication unit that is configured to authenticate the authentication target person by using a face image of the authentication target person included in the captured image;
a comparison unit that is configured to determine, based on the position information, an expected background information related to a background behind the authentication target person that is expected to be included in the captured image, and compare the expected background information and an actual background information related to a background behind the authentication target person that is actually included in the captured image; and
an output unit that is configured to output an information indicating an authenticated result of the authentication target person and an information indicating a compared result of the expected background information and the actual background information.

### [Supplementary Note 2]

The authentication apparatus according to Supplementary Note 1, wherein
the expected background information includes an information related to an object that is expected to be included in the captured image as the background behind the authentication target person,
the actual background information includes an information related to an object that is actually included in the captured image as the background behind the authentication target person.

### [Supplementary Note 3]

The authentication apparatus according to Supplementary Note 1 or 2, wherein
the expected background information includes an information related to a weather at the captured position at a time at which the image of the authentication target person is captured,
the actual background information includes an information related to a weather that is determinable from the background behind the authentication target that is actually included in the captured image.

### [Supplementary Note 4]

The authentication apparatus according to any one of Supplementary Notes 1 to 3, wherein
the obtaining unit is configured to obtain the captured image together with the position information and at least one of an orientation information related to a captured orientation with which the image of the authentication target person is captured, a date and time information related to a captured date and time at which the image of the authentication target person is captured and an altitude information related to a captured altitude at which the image of the authentication target person is captured,
the comparison unit is configured to determine the expected background information based on the position information and at least one of the orientation information, the date and time information and the altitude information.

### [Supplementary Note 5]

The authentication apparatus according to any one of Supplementary Notes 1 to 4, wherein
the comparison unit is configured to determine the expected background information based on the position information and a reference information that should be used to determine the expected background information from the position information.

### [Supplementary Note 6]

The authentication apparatus according to Supplementary Note 5, wherein
the reference information includes at least one of a first information related to a map, a second information in which the position information obtained by the obtaining unit is associated with the actual background information, a third information in which the captured position is associated with an information related to the background that is actually included in an image obtained by capturing an image at the captured position, and a fourth information in which the captured position is associated with an information related to a status of the captured position.

### [Supplementary Note 7]

The authentication apparatus according to Supplementary Note 6, wherein
the fourth information includes an information in which the captured position is associated with an information related to a weather at the captured position.

### [Supplementary Note 8]

The authentication apparatus according to Supplementary Note 6 or 7, wherein
the captured position is included in a construction site,
the fourth information includes an information in which a position of the construction site is associated with an information related to a progress status of a construction in the construction site.

### [Supplementary Note 9]

The authentication apparatus according to any one of Supplementary Notes 1 to 8, wherein
the output unit is configured to output, based on the information indicating the compared result of the expected background information and the actual background information, an alert information for alerting that the position information is possibly fake.

### [Supplementary Note 10]

An authentication system including:
an imaging apparatus that is configured to capture an image of an authentication target person;
an authentication apparatus that is configured to authenticate the authentication target person by using a captured image captured by the imaging apparatus; and
a management apparatus that is configured to manage an authenticated result by the authentication apparatus,
the authentication apparatus including:
   an obtaining unit that is configured to obtain the captured image together with a position information indicating a captured position at which the image of the authentication target person is captured;
   an authentication unit that is configured to authenticate the authentication target person by using a face image of the authentication target person included in the captured image;
   a comparison unit that is configured to determine, based on the position information, an expected background information related to a background behind the authentication target person that is expected to be included in the captured image, and compare the expected background information and an actual background information related to a background behind the authentication target person that is actually included in the captured image; and
   an output unit that is configured to output, to the management apparatus, an information indicating the authenticated result of the authentication target person and an information indicating a compared result of the expected background information and the actual background information,
   the management apparatus being configured to output, based on the information indicating the compared result of the expected background information and the actual background information, an alert information for alerting that the position information is possibly fake.

### [Supplementary Note 11]

The authentication system according to Supplementary Note 10, wherein
the information indicating the compared result of the expected background information and the actual background information includes an information indicating a dissimilarity between the expected background information and the actual background information,
the management apparatus is configured to output the alert information for alerting that the position information, which is obtained together with the captured image corresponding to the dissimilarity larger than a first threshold value, is possibly fake

### [Supplementary Note 12]

The authentication system according to Supplementary Note 10 or 11, wherein
the information indicating the compared result of the expected background information and the actual background information includes an information indicating a dissimilarity between the expected background information and the actual background information,
the comparison unit is configured to compare the expected background information and the actual background information for each of a plurality of captured images,
the management apparatus is configured to output the alert information for alerting that the position information, which is obtained together with at least one captured image corresponding to the relatively large dissimilarity, is possibly fake

### [Supplementary Note 13]

An authentication method including:
obtaining a captured image obtained by capturing an image of an authentication target person together with a position information indicating a captured position at which the image of the authentication target person is captured;
authenticating the authentication target person by using a face image of the authentication target person included in the captured image;
determining, based on the position information, an expected background information related to a background behind the authentication target person that is expected to be included in the captured image, and comparing the expected background information and an actual background information related to a background behind the authentication target person that is actually included in the captured image; and
outputting an information indicating an authenticated result of the authentication target person and an information indicating a compared result of the expected background information and the actual background information.

### [Supplementary Note 14]

A computer program that allows a computer to execute an authentication method is recorded,
the authentication method including:
obtaining a captured image obtained by capturing an image of an authentication target person together with a position information indicating a captured position at which the image of the authentication target person is captured;
authenticating the authentication target person by using a face image of the authentication target person included in the captured image;
determining, based on the position information, an expected background information related to a background behind the authentication target person that is expected to be included in the captured image, and comparing the expected background information and an actual background information related to a background behind the authentication target person that is actually included in the captured image; and
outputting an information indicating an authenticated result of the authentication target person and an information indicating a compared result of the expected background information and the actual background information.

### [Supplementary Note 15]

Anon-transitory recording medium on which a computer program that allows a computer to execute an authentication method is recorded,
the authentication method including:
obtaining a captured image obtained by capturing an image of an authentication target person together with a position information indicating a captured position at which the image of the authentication target person is captured;
authenticating the authentication target person by using a face image of the authentication target person included in the captured image;
determining, based on the position information, an expected background information related to a background behind the authentication target person that is expected to be included in the captured image, and comparing the expected background information and an actual background information related to a background behind the authentication target person that is actually included in the captured image; and
outputting an information indicating an authenticated result of the authentication target person and an information indicating a compared result of the expected background information and the actual background information.

The present disclosure is not limited to the above described example embodiment. The present disclosure is allowed to be changed, if desired, without departing from the essence or spirit of the invention which can be read from the Supplementary Notes and the entire specification, and an authentication apparatus, an authentication system, an authentication method, a computer program and a recording medium, which involve such changes, are also intended to be within the technical scope of the present disclosure.

This application is based upon and claims the benefit of priority from Japanese Patent Application No. 2019-202245, filed on November 7, 2019, and incorporates all of its disclosure herein, if legally permitted. Moreover, this application incorporates all of the publications of application and articles, if legally permitted.

### Description of Reference Codes

- SYS: authentication system
- 1: imaging apparatus
- 11: camera
- 12: position measurement apparatus
- 13: communication apparatus
- 2: authentication server
- 21: arithmetic apparatus
- 212: face authentication unit
- 214: background comparison unit
- 22: storage apparatus
- 222: map DB
- 223: authentication log DB
- 23: communication apparatus
- 3: management server
- 31: arithmetic apparatus
- 311: log extraction unit
- 312: alert control unit
- 100: captured image
- 101: face region
- 110: face image
- 102: eye region
- 103: iris region
- 130: iris image
- CP: face feature point

## Claims

1. An authentication apparatus comprising:
an obtaining unit that is configured to obtain a captured image obtained by capturing an image of an authentication target person together with a position information indicating a captured position at which the image of the authentication target person is captured;
an authentication unit that is configured to authenticate the authentication target person by using a face image of the authentication target person included in the captured image;
a comparison unit that is configured to determine, based on the position information, an expected background information related to a background behind the authentication target person that is expected to be included in the captured image, and compare the expected background information and an actual background information related to a background behind the authentication target person that is actually included in the captured image; and
an output unit that is configured to output an information indicating an authenticated result of the authentication target person and an information indicating a compared result of the expected background information and the actual background information.

2. The authentication apparatus according to claim 1, wherein
the expected background information includes an information related to an object that is expected to be included in the captured image as the background behind the authentication target person,
the actual background information includes an information related to an object that is actually included in the captured image as the background behind the authentication target person.

3. The authentication apparatus according to claim 1 or 2, wherein
the expected background information includes an information related to a weather at the captured position at a time at which the image of the authentication target person is captured,
the actual background information includes an information related to a weather that is determinable from the background behind the authentication target that is actually included in the captured image.

4. The authentication apparatus according to any one of claims 1 to 3, wherein
the obtaining unit is configured to obtain the captured image together with the position information and at least one of an orientation information related to a captured orientation with which the image of the authentication target person is captured, a date and time information related to a captured date and time at which the image of the authentication target person is captured and an altitude information related to a captured altitude at which the image of the authentication target person is captured,
the comparison unit is configured to determine the expected background information based on the position information and at least one of the orientation information, the date and time information and the altitude information.

5. The authentication apparatus according to any one of claims 1 to 4, wherein
the comparison unit is configured to determine the expected background information based on the position information and a reference information that should be used to determine the expected background information from the position information.

6. The authentication apparatus according to claim 5, wherein
the reference information includes at least one of a first information related to a map, a second information in which the position information obtained by the obtaining unit is associated with the actual background information, a third information in which the captured position is associated with an information related to the background that is actually included in an image obtained by capturing an image at the captured position, and a fourth information in which the captured position is associated with an information related to a status of the captured position.

7. The authentication apparatus according to claim 6, wherein
the fourth information includes an information in which the captured position is associated with an information related to a weather at the captured position.

8. The authentication apparatus according to claim 6 or 7, wherein
the captured position is included in a construction site,
the fourth information includes an information in which a position of the construction site is associated with an information related to a progress status of a construction in the construction site.

9. The authentication apparatus according to any one of claims 1 to 8, wherein
the output unit is configured to output, based on the information indicating the compared result of the expected background information and the actual background information, an alert information for alerting that the position information is possibly fake.

10. An authentication system comprising:
an imaging apparatus that is configured to capture an image of an authentication target person;
an authentication apparatus that is configured to authenticate the authentication target person by using a captured image captured by the imaging apparatus; and
a management apparatus that is configured to manage an authenticated result by the authentication apparatus,
the authentication apparatus including:
an obtaining unit that is configured to obtain the captured image together with a position information indicating a captured position at which the image of the authentication target person is captured;
an authentication unit that is configured to authenticate the authentication target person by using a face image of the authentication target person included in the captured image;
a comparison unit that is configured to determine, based on the position information, an expected background information related to a background behind the authentication target person that is expected to be included in the captured image, and compare the expected background information and an actual background information related to a background behind the authentication target person that is actually included in the captured image; and
an output unit that is configured to output, to the management apparatus, an information indicating the authenticated result of the authentication target person and an information indicating a compared result of the expected background information and the actual background information,
the management apparatus being configured to output, based on the information indicating the compared result of the expected background information and the actual background information, an alert information for alerting that the position information is possibly fake.

11. The authentication system according to claim 10, wherein
the information indicating the compared result of the expected background information and the actual background information includes an information indicating a dissimilarity between the expected background information and the actual background information,
the management apparatus is configured to output the alert information for alerting that the position information, which is obtained together with the captured image corresponding to the dissimilarity larger than a first threshold value, is possibly fake

12. The authentication system according to claim 10 or 11, wherein
the information indicating the compared result of the expected background information and the actual background information includes an information indicating a dissimilarity between the expected background information and the actual background information,
the comparison unit is configured to compare the expected background information and the actual background information for each of a plurality of captured images,
the management apparatus is configured to output the alert information for alerting that the position information, which is obtained together with at least one captured image corresponding to the relatively large dissimilarity, is possibly fake

13. An authentication method comprising:
obtaining a captured image obtained by capturing an image of an authentication target person together with a position information indicating a captured position at which the image of the authentication target person is captured;
authenticating the authentication target person by using a face image of the authentication target person included in the captured image;
determining, based on the position information, an expected background information related to a background behind the authentication target person that is expected to be included in the captured image, and comparing the expected background information and an actual background information related to a background behind the authentication target person that is actually included in the captured image; and
outputting an information indicating an authenticated result of the authentication target person and an information indicating a compared result of the expected background information and the actual background information.

14. A recording medium on which a computer program that allows a computer to execute an authentication method is recorded,
the authentication method comprising:
obtaining a captured image obtained by capturing an image of an authentication target person together with a position information indicating a captured position at which the image of the authentication target person is captured;
authenticating the authentication target person by using a face image of the authentication target person included in the captured image;
determining, based on the position information, an expected background information related to a background behind the authentication target person that is expected to be included in the captured image, and comparing the expected background information and an actual background information related to a background behind the authentication target person that is actually included in the captured image; and
outputting an information indicating an authenticated result of the authentication target person and an information indicating a compared result of the expected background information and the actual background information.
